(19)

Europäisches
Patentamt
European
Patent Office
Office européen
des brevets

(11)  **EP 4 202 804 A1**

(12)  **EUROPEAN PATENT APPLICATION**

(43) Date of publication:
**28.06.2023  Bulletin 2023/26**

(21) Application number: **22209299.1**

(22) Date of filing: **24.11.2022**

(51) International Patent Classification (IPC):
*G06N 20/00* (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021  JP 2021208473**

(71) Applicants:
• **FUJITSU LIMITED**
  **Kawasaki-shi, Kanagawa 211-8588 (JP)**
• **OSAKA UNIVERSITY**
  **Suita-shi**
  **Osaka 565-0871 (JP)**

(72) Inventors:
• **Suzuki, Hirofumi**
  **Kawasaki-shi, Kanagawa, 211-8588 (JP)**
• **Goto, Keisuke**
  **Kawasaki-shi, Kanagawa, 211-8588 (JP)**
• **Iwashita, Hiroaki**
  **Kawasaki-shi, Kanagawa, 211-8588 (JP)**
• **Takagi, Takuya**
  **Kawasaki-shi, Kanagawa, 211-8588 (JP)**
• **Ohori, Kotaro**
  **Kawasaki-shi, Kanagawa, 211-8588 (JP)**
• **Hara, Satoshi**
  **Suita-shi, Osaka, 565-0871 (JP)**

(74) Representative: **Hoffmann Eitle**
**Patent- und Rechtsanwälte PartmbB**
**Arabellastraße 30**
**81925 München (DE)**

(54)  **INFORMATION PROCESSING PROGRAM, INFORMATION PROCESSING METHOD, AND INFORMATION PROCESSING DEVICE**

(57)  An information processing device (10) classifies (22) a plurality of linear models, each of which includes one or more variables, into a plurality of groups in such a way that linear models which include identical variables included in each of the plurality of linear models and which have identical coefficient encoding with respect to the variables are grouped in same group, outputs (22) first question used in deciding degree of importance of each explanatory variable included in training data which is used in training, by using machine learning, of the plurality of linear models, and decides (22) on an explanatory variable about which second question is to be asked, when a linear model in which the degree of importance is reflected is to be selected from the plurality of linear models, based on extent of decrease in number of target groups for selection according to an answer to the first question.

FIG.12

EP 4 202 804 A1

**Description**

FIELD

The embodiments discussed herein are related to an information processing program, an information processing method, and an information processing device.

BACKGROUND

With the popularization of the artificial intelligence (AI) technology, there has been an increase in the demand for a machine learning model that is capable of providing explanation, because of the fact that the determination made by a black-box-type machine learning model is difficult to be accepted without questioning and because of the wish that the premise for a human-interpretable determination is presented. Hence, a white box model such as a rule list, a decision tree, or a linear model is used in advance. However, merely using a white-box-type machine learning model does not ensure that the machine learning model is human-interpretable.

An AI model that is out of step with the on-the spot knowledge leaves the user with a low sense of satisfaction. Hence, which of the explanatory variables of the training data appear in an AI model assumes significance. For example, in a linear model, the explanatory variables are weighted using coefficients. Hence, the sense of satisfaction of the user changes depending on the explanatory variables that make an appearance.

In recent years, an interactive approach has been implemented by which the generation of a machine learning model and the feedback to a person is carried out repeatedly, so that a machine learning model is generated that is acceptable to a person and is accurate. For example, a linear model is generated according to formulation in which the degrees of importance of the explanatory variables are adopted. Then, one of the explanatory variable is selected; and the user is asked about whether or not the selected explanatory variable is considered important. That operation is repeatedly performed so as to decide on the explanatory variables. At that time, as the explanatory variable about which a question is to be asked, such an explanatory variable is selected which is predicted to be close to the true optimum solution after the question has been asked.

[Patent Literature 1] Japanese Laid-open Patent Publication No. 2019-169147

In the technology mentioned above, if there are k number of explanatory variables about which no question is asked, a proposed model is randomly selected from $2^k$ number of model candidates. Hence, in order to enhance the sense of satisfaction of the user, it is desirable that a question is asked about a large number of explanatory variables. However, in that case, a significantly high calculation cost is incurred.

Accordingly, it is an object in one aspect of an embodiment of the present invention to provide an information processing program, an information processing method, and an information processing device that enable achieving reduction in the calculation cost at the time of generating a model capable of providing explanation.

SUMMARY

According to an aspect of an embodiment, an information processing program that causes a computer (10) to execute a process. The process includes classifying (22) a plurality of linear models, each of which includes one or more variables, into a plurality of groups in such a way that linear models which include identical variables included in each of the plurality of linear models and which have identical coefficient encoding with respect to the variables are grouped in same group, and deciding (22) that includes outputting first question used in deciding degree of importance of each explanatory variable included in training data which is used in training, by using machine learning, of the plurality of linear models, and deciding on an explanatory variable about which second question is to be asked, when a linear model in which the degree of importance is reflected is to be selected from the plurality of linear models, based on extent of decrease in number of target groups for selection according to an answer to the first question, the second question being a question to be outputted after the first question.

BRIEF DESCRIPTION OF DRAWINGS

FIG. 1 is a diagram for explaining an information processing device according to a first embodiment;
FIG. 2 is a diagram for explaining the relationship between explanatory variables and coefficients;
FIG. 3 is a functional block diagram illustrating a functional configuration of the information processing device according to the first embodiment;
FIG. 4 is a diagram illustrating an example of training data;

FIG. 5 is a diagram for explaining a plurality of linear models and explaining the grouping performed according to equivalence classes;

FIG. 6 is a diagram for explaining the changes occurring in the number of remaining equivalence classes with respect to a question;

FIG. 7 is a diagram for explaining the selection of the explanatory variable about which a question is to be asked;

FIG. 8 is a diagram for explaining an example of a screen used for asking a question;

FIG. 9 is a diagram for explaining the result when an explanatory variable 2 is not useful, and for explaining the requestioning;

FIG. 10 is a diagram for explaining the result in the case in which an explanatory variable 4 is not important;

FIG. 11 is a diagram for explaining an example of a screen used at the time of outputting a linear model;

FIG. 12 is a flowchart for explaining the flow of operations; and

FIG. 13 is a diagram for explaining an exemplary hardware configuration.

DESCRIPTION OF EMBODIMENTS

Preferred embodiments will be explained with reference to accompanying drawings. However, the present invention is not limited by the embodiments described below. Moreover, it is possible to combine the embodiments without causing any contradictions.

[a] First Embodiment

Explanation of information processing device

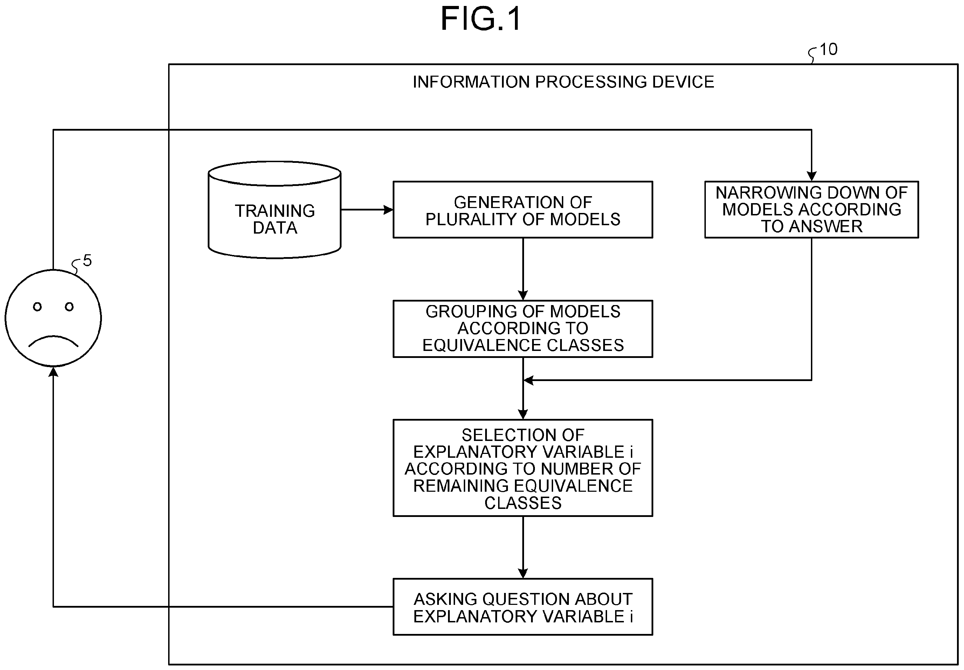

FIG. 1 is a diagram for explaining an information processing device 10 according to a first embodiment. As illustrated in FIG. 1, the information processing device 10 is an example of a computer that implements an interactive approach in which questions are repeatedly asked to a user 5, and generates a model that is acceptable to the user 5 and is accurate.

Regarding the models that are capable of providing explanation and that are in use in recent years, sometimes a model is generated that is out of step with the on-the spot knowledge such as the model generation environment or the model implementation environment. That leaves the user with a low sense of satisfaction. For example, the explanation is given with reference to a linear model (hereinafter, sometimes referred to simply as a "model"). In a linear model, the explanatory variables are weighted using coefficients. Hence, in order to enhance the sense of satisfaction of the user, which of the explanatory variables of the training data appear in the model assumes significance.

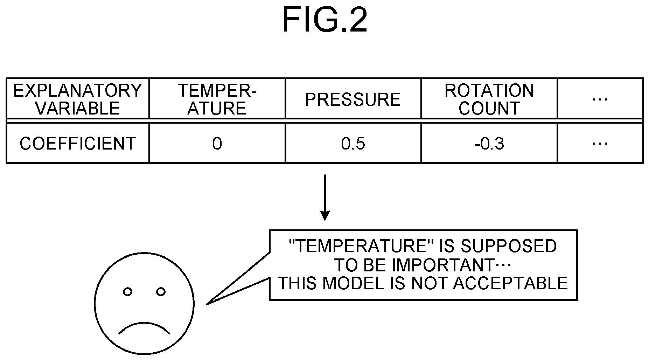

FIG. 2 is a diagram for explaining the relationship between explanatory variables and coefficients. As illustrated in FIG. 2, "temperature", "pressure", and "rotation count" represent the explanatory variables of the training data; and "0", "0.5", and "-0.3" represent the respective coefficients. In that case, the sense of satisfaction changes according to the coefficients of the explanatory variables that make an appearance. It is desirable that no important explanatory variable is equal to "0". In the example illustrated in FIG. 2, the explanatory variable "temperature" has the coefficient equal to "0". Hence, for a user who considers the explanatory variable "temperature" to be an important variable, that model happens to an unsatisfactory model.

In view of such issues, an interactive approach is used. More particularly, the information processing device 10 generates a linear model according to formulation in which the degrees of importance of the explanatory variables are adopted. Then, one of the explanatory variable is selected; and the user is asked whether or not the selected explanatory variable is considered important. That operation is repeatedly performed so as to determine the degree of importance of each explanatory variable. At that time, as the explanatory variable about which a question is to be asked, the information processing device 10 selects such an explanatory variable which is predicted to be close to the true optimum solution after the question has been asked.

In this method, regarding an explanatory variable for which no question is yet asked, whether or not that explanatory variable is important is assumed in a random manner, and the linear model to be proposed is randomly selected from some of the possible models. That is, in order to enhance the sense of satisfaction of the user, it is desirable to ask questions about a large number of explanatory variables. However, in that case, a significantly high calculation cost is incurred at the time of generating a model capable of providing explanation.

Thus, regarding a plurality of linear models each of which includes one or more variables, the information processing device 10 according to the first embodiment classifies the linear models into a plurality of groups in such a way that the linear models in which the variables included therein and the coefficient encoding with respect to the variables are identical are classified in same groups (equivalence classes). Then, the information processing device 10 outputs a question that is to be used in deciding on the degree of importance of each explanatory variable included in the training data that is used in training a plurality of linear models. Then, from among a plurality of linear models, when a linear model having the degree of importance reflected therein is to be selected, the information processing device 10 decides on the explanatory variable, about which the question is to be asked, based on the extent of decrease in the number of target groups for selection on the basis of the answer to the question.

More particularly, as illustrated in FIG. 1, the information processing device 10 generates a plurality of linear models in which information about whether or not each explanatory variable of the training data is to be given importance is combined, and the linear models are grouped according to the equivalence classes having identical coefficients and identical coefficient encoding. Then, the information processing device 10 repeatedly performs the operation in which: an explanatory variable i is selected about which a question is to be asked according to the number of remaining equivalence classes; a question is asked about whether or not the explanatory variable i is important; and the linear models are narrowed down according to the answer to the question. As a result, a linear model that is suitable for the user is generated in an interactive manner while exerting less burden on the user.

That is, the information processing device 10 classifies the linear models into equivalence classes of the coefficient encoding in such a way that the models suitable for the user become equivalent to one of the equivalence classes. Then, the information processing device 10 selects an explanation variable, about which a question is to be asked, in such a way that the number of candidate equivalence classes significantly decreases; and narrows down the equivalence classes in an efficient manner. As a result, the information processing device 10 enables achieving reduction in the calculation cost at the time generating a model capable of providing explanation, and enables achieving reduction in the processing load and the processing time.

Functional configuration of information processing device

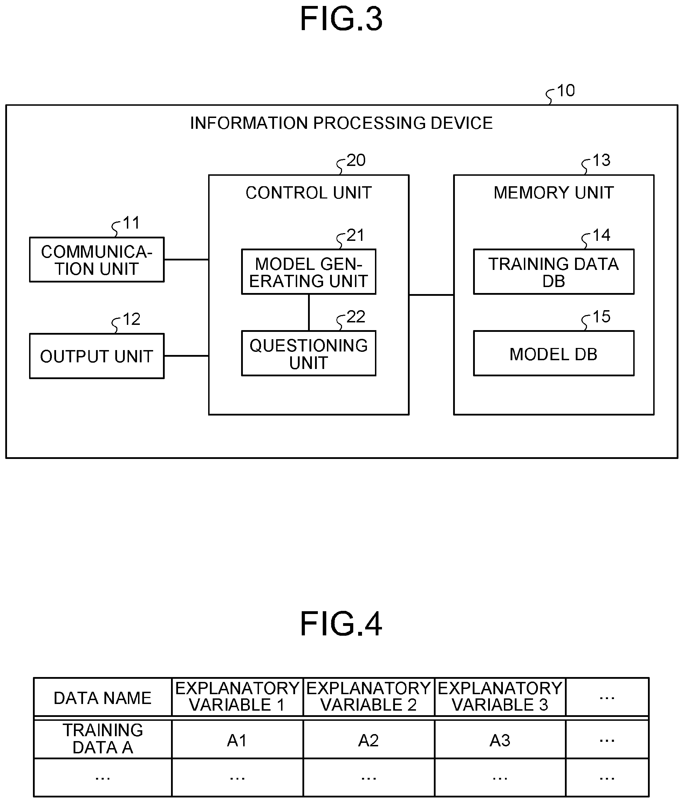

FIG. 3 is a functional block diagram illustrating a functional configuration of the information processing device 10 according to the first embodiment. As illustrated in FIG. 3, the information processing device 10 includes a communication unit 11, an output unit 12, a memory unit 13, and a control unit 20.

The communication unit 11 is a processing unit that controls the communication with other devices and is implemented using, for example, a communication interface. For example, the communication unit 11 sends a variety of data to and receives a variety of data from an administrator terminal.

The output unit 12 is a processing unit that outputs a variety of information for display purpose and is implemented using, for example, a display or a touch-sensitive panel. For example, the output unit 12 display various screens (explained later), and receives answers via the screens.

The memory unit 13 is a processing unit that is used to store a variety of data and to store various computer programs to be executed by the control unit 20; and is implemented using, for example, a memory or a hard disk. The memory unit 13 is used to store a training data database (DB) 14 and a model DB 15.

The training data DB 14 is a database for storing training data (training data) used in the learning (training) of a linear model. The stored training data contains a plurality of explanatory variables. FIG. 4 is a diagram illustrating an example of the training data. As illustrated in FIG. 4, in the training data DB 14, a data name enabling identification of a set of training data is stored in a corresponding manner to a plurality of explanatory variables included in that set of training data. In the example illustrated in FIG. 4, training data A contains explanatory variables A1, A2, and A3. Herein, the explanatory variables indicate, for example, temperature. Moreover, when a set of training data is used in supervised training, a label representing correct solution information is also set.

The model DB 15 is a database for storing a plurality of linear models. Although the detailed explanation is given later, each linear model is generated by a model generating unit 21 (explained later) for the purpose of achieving consistency with the on-the spot knowledge.

The control unit 20 is a processing unit that controls the entire information processing device 10 and is implemented using, for example, a processor. The control unit 20 includes the model generating unit 21 and a questioning unit 22. The model generating unit 21 and the questioning unit 22 are implemented using an electronic circuit included in a processor or using processes executed by a processor.

The model generating unit 21 is a processing unit that generates a plurality of linear models based on the training data. More particularly, according to a method such as Lasso, based on the formulation in which the degrees of importance of the explanatory variables are adopted, the model generating unit 21 generates a plurality of linear models in which the degrees of importance are assigned in different ways; and stores the linear models in the model DB 15.

For example, the model generating unit 21 generates a linear model expressed using Equation (1) given below. A linear model L expressed using Equation (1) is defined as the sum of a first member indicating the control of the accuracy and a second member indicating the control of the explanatory variables that make an appearance. Herein, X represents explanatory variables of the training data, and y represents an objective variable (label) of the training data. Moreover, $\beta_i$ represents the coefficient of the explanatory variable i, and $\rho_i$ represents the degree of importance of the explanatory variable i. Herein, the degree of importance $\rho_i$ is either equal to $\varepsilon$ or equal to w (where $0<\varepsilon<w<\infty$ holds true, user parameter), and represents a variable that cannot be defined unless a question is asked to the user. When $\rho_i=\varepsilon$ holds true, the explanatory variable i is processed as an important element. On the other hand, when $\rho_i=w$ holds true, the explanatory variable i is processed as a nonimportant element. In this way, according to the value of $\rho$, the model

generating unit 21 can set the degree of importance of an explanatory variable.

$$L(\beta \mid \rho) = \|y - X\beta\|_2^2 + \sum_{i=0}^{i=p} \rho_i |\beta_i| \tag{1}$$

In the first embodiment, the model generating unit 21 generates a plurality of linear models according to formulation by combining, regarding each explanatory variable included in the training data, a first-type degree of importance ($\rho=\varepsilon$) in the case of assuming that the concerned explanatory variable is important and a second-type degree of importance ($p=w$) in the case of assuming that the concerned explanatory variable is not important.

More particularly, the model generating unit 21 generates a plurality of linear models according to combinations, regarding each explanatory variable, of the case in which the explanatory variable is important ($\rho=\varepsilon$) and the case in which the explanatory variable is not important ($p=w$). For example, when there are two explanatory variables $\alpha_1$ and $\alpha_2$, the model generating unit 21 generates four linear models by combining the following four cases: the explanatory variable $\alpha_1$ is given importance (coefficient $\rho_1=\varepsilon$), the explanatory variable $\alpha_2$ is not given importance (coefficient $\rho_2=w$), the explanatory variable $\alpha_2$ is given importance (coefficient $\rho_2=\varepsilon$), and the explanatory variable $\alpha_2$ is not given importance (coefficient $\rho_2=w$).

That is, when a model is expressed as "model name, $\rho$ (the degree of importance of an explanatory variable 1, the degree of importance of an explanatory variable 2), the model generating unit 21 generates the following four models: "model 1, $\rho(\varepsilon, \varepsilon)$", "model 2, $p(w, \varepsilon)$", "model 3, $\rho(\varepsilon, w)$", and "model 4, $\rho(w, w)$".

The questioning unit 22 is a processing unit that asks a question to the user about whether or not an explanatory variable is important. More particularly, the questioning unit 22 repeatedly performs the following sequence of operations: (1) classifying a plurality of models into equivalence classes of coefficient encoding; (2) asking a question about an explanatory variable that causes a significant decrease in the number of equivalence classes that is to be taken into account; and (3) narrowing down the linear models according to the answer to the question.

Given below is the explanation of each operation included in the sequence of operations mentioned above. The following explanation is given about an example in which: the training data contains four explanatory variables; and 16 linear models (M1 to M16) are generated in which the coefficient $\beta_i$ of each explanatory variable i is calculated and in which the degrees of importance are assigned in different ways.

(1) Classification (grouping) of plurality of linear models

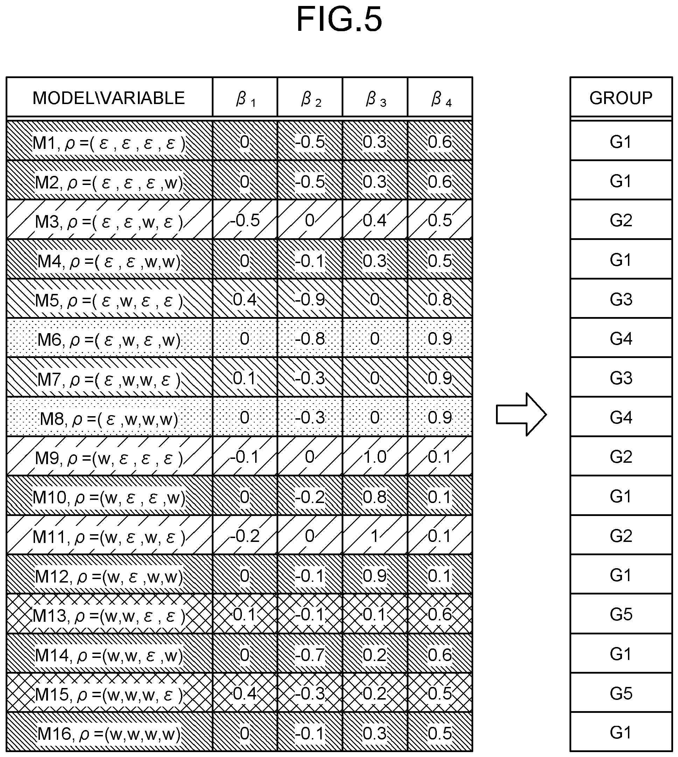

FIG. 5 is a diagram for explaining a plurality of linear models and explaining the grouping performed according to equivalence classes. As illustrated in FIG. 5, 16 linear models from the model M1 to the model M16 are generated by the model generating unit 21. Herein, it is assumed that each model is expressed as "the model name, the degree of importance $\rho$ (whether or not the explanatory variable 1 is important (whether $\varepsilon$ or w), whether or not the explanatory variable 2 is important, whether or not an explanatory variable 3 is important, and whether or not an explanatory variable 4 is important), the coefficient of each explanatory variable". For example, in the case of "M, $\rho(\varepsilon, w)$, $\beta_1=0.1$, $\beta_2=-0.5$", it is indicated that the linear model performs calculation in which the explanatory variable 1 is given importance but the explanatory variable 2 is not given importance, and has "$\beta_1=0.1$" set as the coefficient of the explanatory variable 1 and has "$\beta_2=-0.5$" set as the coefficient of the explanatory variable 2.

The model M1 has the degree of importance $\rho(\varepsilon, \varepsilon, \varepsilon, \varepsilon)$, the coefficient $\beta_1=0$ for the explanatory variable 1, the coefficient $\beta_2=-0.5$ for the explanatory variable 2, the coefficient $\beta_3=0.3$ for the explanatory variable 3, and the coefficient $\beta_4=0.6$ for the explanatory variable 4. The model M2 has the degree of importance $\rho(\varepsilon, \varepsilon, \varepsilon, w)$, the coefficient $\beta_1=0$, the coefficient $\beta_2=-0.5$, the coefficient $\beta_3=0.3$, and the coefficient $\beta_4=0.6$. The model M3 includes the degree of importance $\rho(\varepsilon, \varepsilon, w, \varepsilon)$, the coefficient $\beta_1=-0.5$, the coefficient $\beta_2=0$, the coefficient $\beta_3=0.4$, and the coefficient $\beta_4=0.5$. The model M4 includes the degree of importance $\rho(\varepsilon, \varepsilon, w, w)$, the coefficient $\beta_1=0$, the coefficient $\beta_2=-0.1$, the coefficient $\beta_3=0.3$, and the coefficient $\beta_4=0.5$.

The model M5 includes the degree of importance $\rho(\varepsilon, w, \varepsilon, \varepsilon)$, the coefficient $\beta_1=0.4$, the coefficient $\beta_2=-0.9$, the coefficient $\beta_3=0$, and the coefficient $\beta_4=0.8$. The model M6 includes the degree of importance $\rho(\varepsilon, w, \varepsilon, w)$, the coefficient $\beta_1=0$, the coefficient $\beta_2=-0.8$, the coefficient $\beta_3=0$, and the coefficient $\beta_4=0.9$. The model M7 includes the degree of importance $\rho(\varepsilon, w, w, \varepsilon)$, the coefficient $\beta_1=0.1$, the coefficient $\beta_2=-0.3$, the coefficient $\beta_3=0$, and the coefficient $\beta_4=0.9$. The model M8 includes the degree of importance $\rho(\varepsilon, w, w, w)$, the coefficient $\beta_1=0$, the coefficient $\beta_2=-0.3$, the coefficient $\beta_3=0$, and the coefficient $\beta_4=0.9$.

The model M9 includes the degree of importance $p(w, \varepsilon, \varepsilon, \varepsilon)$, the coefficient $\beta_1=-0.1$, the coefficient $\beta_2=0$, the coefficient $\beta_3=1.0$, and the coefficient $\beta_4=0.1$. The model M10 includes the degree of importance $p(w, \varepsilon, \varepsilon, w)$, the

coefficient $\beta_1$=0, the coefficient $\beta_2$=-0.2, the coefficient $\beta_3$=0.8, and the coefficient $\beta_4$=0.1. The model M11 includes the degree of importance p(w, $\varepsilon$, w, $\varepsilon$), the coefficient $\beta_1$=-0.2, the coefficient $\beta_2$=0, the coefficient $\beta_3$=1, and the coefficient $\beta_4$=0.1. The model M12 includes the degree of importance p(w, $\varepsilon$, w, w), the coefficient $\beta_1$=0, the coefficient $\beta_2$=-0.1, the coefficient $\beta_3$=0.9, and the coefficient $\beta_4$=0.1.

The model M13 includes the degree of importance p(w, w, $\varepsilon$, $\varepsilon$), the coefficient $\beta_1$=0.1, the coefficient $\beta_2$=-0.1, the coefficient $\beta_3$=0.1, and the coefficient $\beta_4$=0.6. The model M14 includes the degree of importance p(w, w, $\varepsilon$, w), the coefficient $\beta_1$=0, the coefficient $\beta_2$=-0.7, the coefficient $\beta_3$=0.2, and the coefficient $\beta_4$=0.6. The model M15 includes the degree of importance p(w, w, w, $\varepsilon$), the coefficient $\beta_1$=0.4, the coefficient $\beta_2$=-0.3, the coefficient $\beta_3$=0.2, and the coefficient $\beta_4$=0.5. The model M16 includes the degree of importance p(w, w, w, w), the coefficient $\beta_1$=0, the coefficient $\beta_2$=-0.1, the coefficient $\beta_3$=0.3, and the coefficient $\beta_4$=0.5.

In such a state, the questioning unit 22 groups the models according to equivalence classes in each of which models having the same coefficient encoding for all explanatory variables are collected together. For example, the questioning unit 22 classifies, into a group 1 (G1), the models M1, M2, M4, M10, M12, M14, and M16 that have the same coefficient ($\beta_i$). In an identical manner, the questioning unit 22 classifies, into a group 2 (G2), the models M3, M9, and M11 that have the same coefficient ($\beta_i$); classifies, into a group 3 (G3), the models M5 and M7 that have the same coefficient ($\beta_i$); classifies, into a group 4 (G4), the models M6 and M8 that have the same coefficient ($\beta_i$); and classifies, into a group 5 (G5), the models M13 and M15 that have the same coefficient ($\beta_i$). Thus, the questioning unit 22 classifies the linear models into five groups.

(2) Asking a question about an explanatory variable that causes a significant decrease in the number of equivalence classes that is to be taken into account

Subsequently, regarding each explanatory variable, the questioning unit 22 calculates the number of remaining equivalence classes in the case in which that explanatory variable is important and calculates the number of remaining equivalence classes in the case in which that explanatory variable is not important; and selects such an explanatory variable for which the two calculated counts are balanced and small (i.e., the two calculated counts are close to be equal to each other).

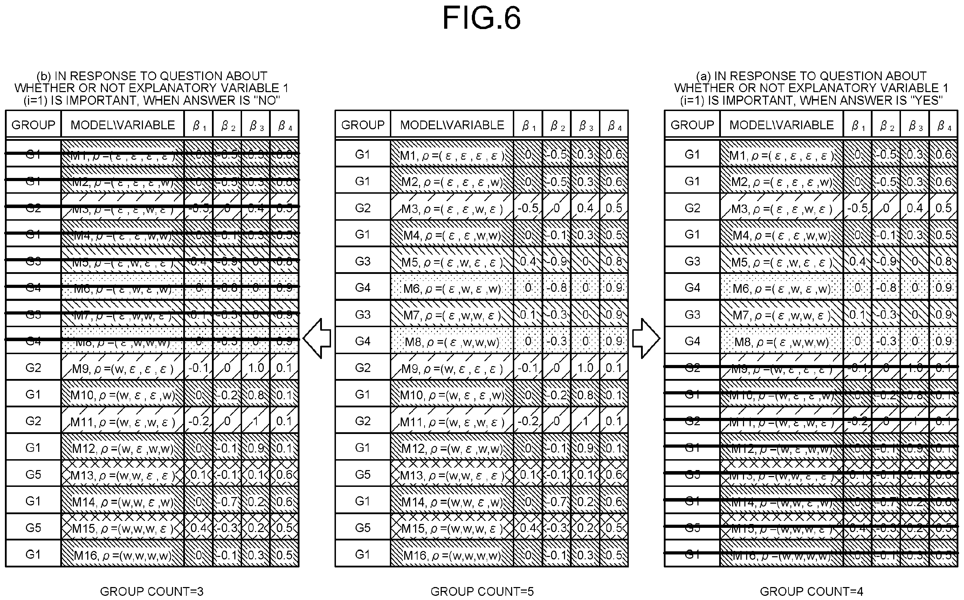

FIG. 6 is a diagram for explaining the changes occurring in the number of remaining equivalence classes with respect to a question. As illustrated in FIG. 6, as far as the linear models classified into five groups are concerned, when a question is asked about whether the explanatory variable 1 (i=1) is important, the questioning unit 22 calculates the number of remaining equivalence classes in the case of receiving an answer indicating that the explanatory variable 1 is important (affirmative answer) and calculates the number of remaining equivalence classes in the case of receiving an answer indicating that the explanatory variable 1 is not important (negative answer).

For example, if it is assumed that the explanatory variable 1 is important; then, as illustrated in (a) in FIG. 6, the questioning unit 22 extracts the models M1, M2, M3, M4, M5, M6, M7, and M8 in which "$\varepsilon$" is set corresponding to the explanatory variable 1; and calculates four as the number of groups (G1, G2, G3, and G4) representing the equivalence classes. That is, if it is assumed that the explanatory variable 1 is important, then the number of groups representing the equivalence classes changes from five to four. Hence, the number of remaining equivalence classes is identified to be four.

On the other hand, if it is assumed that the explanatory variable 1 is not important; then, as illustrated in (b) in FIG. 6, the questioning unit 22 extracts the models M9, M10, M11, M12, M13, M14, M15, and M16; and calculates three as the number of groups (G1, G2, and G5) representing the equivalence classes. That is, if it is assumed that the explanatory variable 1 is not important, then the number of groups representing the equivalence classes changes from five to three. Hence, the number of remaining equivalence classes is identified to be three.

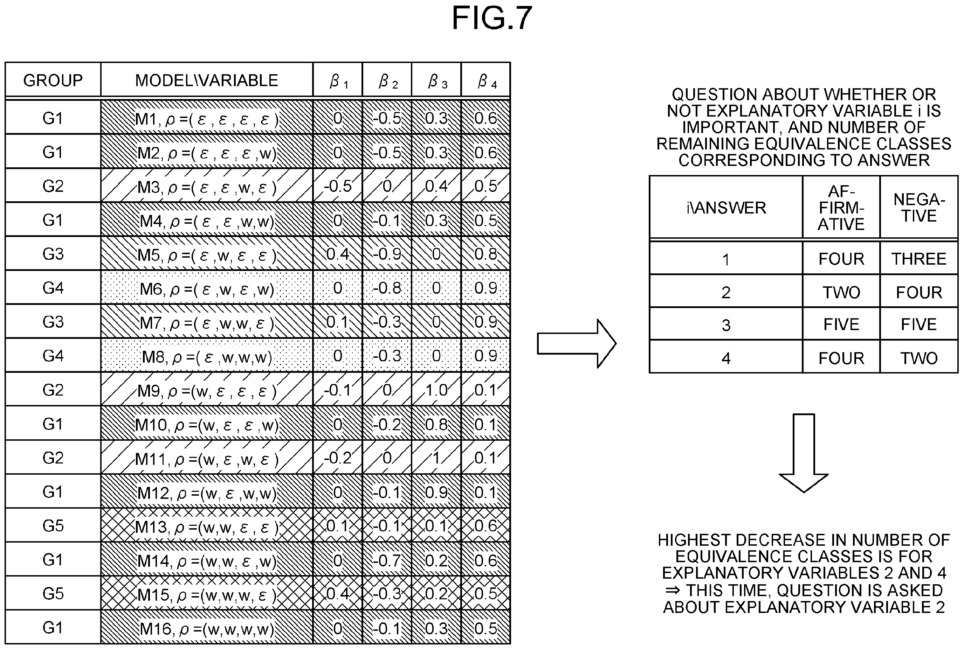

According to the method explained above, the questioning unit 22 calculates the number of remaining equivalence classes in the case in which each explanatory variable is important and calculates the number of remaining equivalence classes in the case in which each explanatory variable is not important; and then selects, as the target for questioning, such an explanatory variable corresponding to which the number of remaining equivalence classes decreases the most. FIG. 7 is a diagram for explaining the selection of the explanatory variable about which a question is to be asked. As illustrated in FIG. 7, the questioning unit 22 selects the explanatory variable 1, asks a question about it, and calculates that the number of remaining equivalence classes is four when the answer is "affirmative (important)" and calculates that the number of remaining equivalence classes is three when the answer is "negative (not important)". In an identical manner, the questioning unit 22 selects the explanatory variable 2, asks a question about it, and calculates that the number of remaining equivalence classes is two when the answer is "affirmative (important)" and calculates that the number of remaining equivalence classes is four when the answer is "negative (not important)". Moreover, the questioning unit 22 selects the explanatory variable 3, asks a question about it, and calculates that the number of remaining equivalence classes is three when the answer is "affirmative (important)" and calculates that the number of remaining equivalence classes is five when the answer is "negative (not important)". Furthermore, the questioning unit 22 selects the explanatory variable 4, asks a question about it, and calculates that the number of remaining equivalence classes is four when the answer is "affirmative (important)" and calculates that the number of remaining equivalence classes is two when the answer is "negative (not important)".

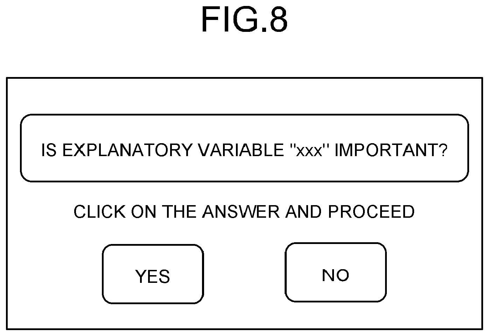

As a result, the questioning unit 22 identifies that: the total number of remaining equivalence classes with respect to the explanatory variable 1 is seven; the total number of remaining equivalence classes with respect to the explanatory variable 2 is six; the total number of remaining equivalence classes with respect to the explanatory variable 3 is 10; the total number of remaining equivalence classes with respect to the explanatory variable 4 is six; and the number of remaining equivalence classes decreases the most for the explanatory variables 2 and 4. Then, from among those two explanatory variables, the explanatory variable 2 is randomly selected and treated as the target for questioning. FIG. 8 is a diagram for explaining an example of a screen used for asking a question. As illustrated in FIG. 8, the questioning unit 22 displays on the output unit 12 or sends to the user terminal a screen that enables selection about whether or not an explanatory variable is important. The screen includes a message such as "Is the explanatory variable "XXX" important?"; includes a button "Yes" that is to be selected when the concerned explanatory variable is important; and a button "No" that is to be selected when the concerned explanatory variable is not important.

(3) Narrowing down the linear models according to the answer to the question

Subsequently, based on the actual answer to the question about the explanatory variable 2 selected at (2), the questioning unit 22 narrows down the linear models that have a high sense of satisfaction to the user. Then, with respect to the narrowed-down linear models, the questioning unit 22 performs the operations explained in (2), and performs questioning regarding the next explanatory variable.

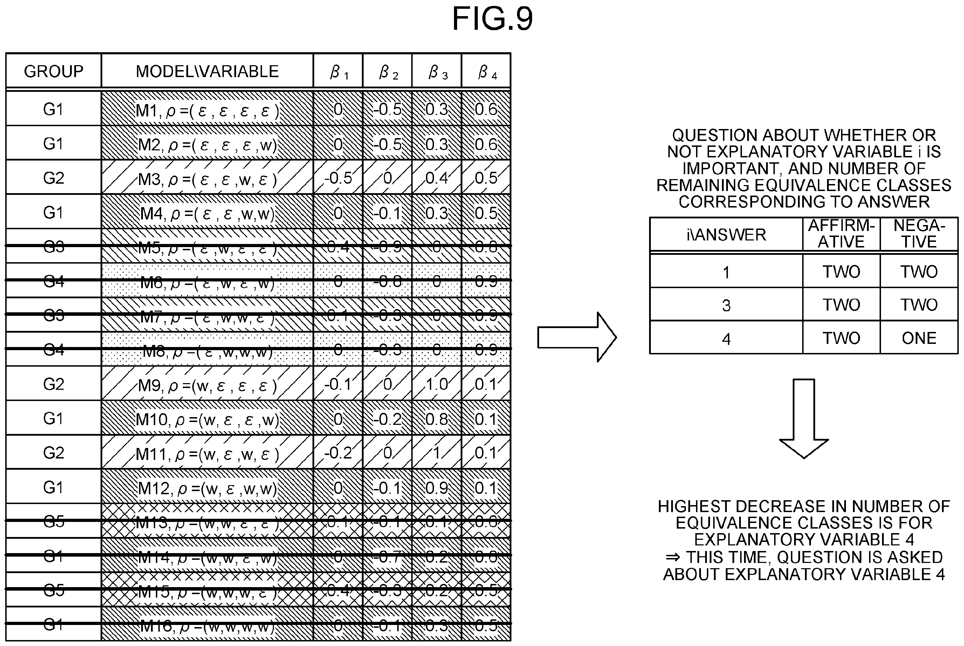

FIG. 9 is a diagram for explaining the result when the explanatory variable 2 is not useful, and for explaining the requestioning. As illustrated in FIG. 9, with respect to the question about whether or not the explanatory variable 2 is important, when an answer indicating "important (affirmative)" is received from the user 5, the questioning unit 22 excludes the linear models in which the second degree of importance $\rho$ is equal to "w" from among the four degrees of importance (i.e., excludes the models M5, M6, M7, M8, M13, M14, M15, and M16). Then, using the remaining linear models (M1, M2, M3, M4, M9, M10, M11, and M12), the questioning unit 22 selects the target for questioning from among the explanatory variables 1, 3, and 4 by performing the operations explained in (2).

More particularly, as illustrated in FIG. 9, the questioning unit 22 selects the explanatory variable 1, asks a question about it, and calculates that the number of remaining equivalence classes is two when the answer is "affirmative (important)" and calculates that the number of remaining equivalence classes is two when the answer is "negative (not important)". In an identical manner, the questioning unit 22 selects the explanatory variable 3, asks a question about it, and calculates that the number of remaining equivalence classes is two when the answer is "affirmative" and calculates that the number of remaining equivalence classes is two when the answer is "negative". Moreover, the questioning unit 22 selects the explanatory variable 4, asks a question about it, and calculates that the number of remaining equivalence classes is two when the answer is "affirmative" and calculates that the number of remaining equivalence classes is one when the answer is "negative".

As a result, the questioning unit 22 identifies that: the total number of remaining equivalence classes with respect to the explanatory variable 1 is four; the total number of remaining equivalence classes with respect to the explanatory variable 3 is 4; the total number of remaining equivalence classes with respect to the explanatory variable 4 is three; and the number of remaining equivalence classes decreases the most for the explanatory variable 4. Hence, the explanatory variable 4 is selected as the target for questioning. Then, using the screen illustrated in FIG. 8, the questioning unit 22 asks the user 5 about whether or not the explanatory variable 4 is important.

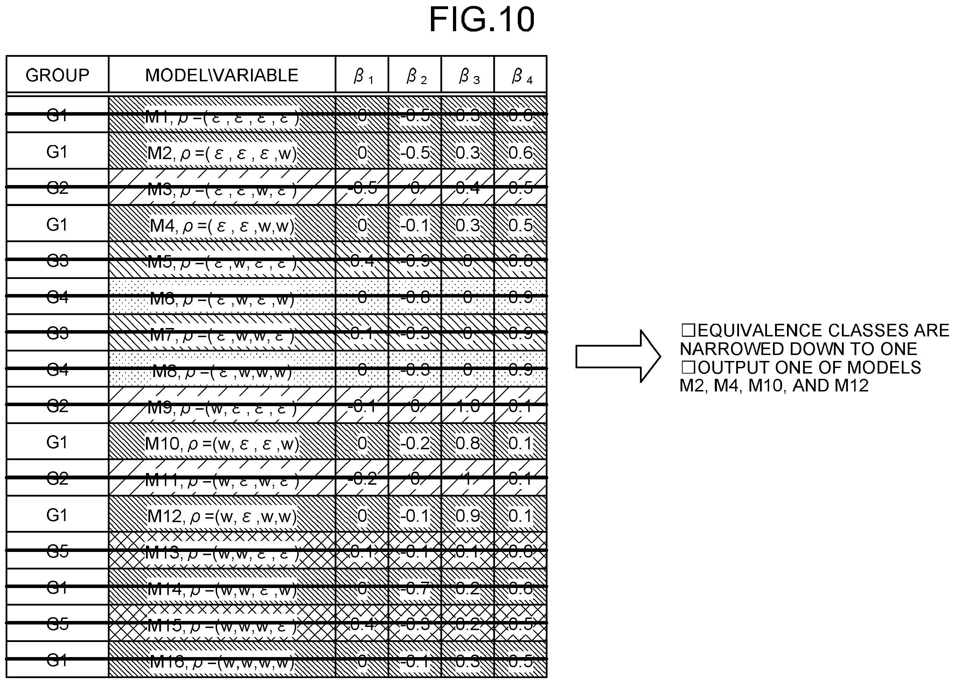

Assume that, with respect to the question about whether or not the explanatory variable 4 is important, the questioning unit 22 receives an answer indicating "not important (negative)" by the user 5. FIG. 10 is a diagram for explaining the result in the case in which the explanatory variable 4 is not important. As illustrated in FIG. 10, the questioning unit 22 excludes, from among the linear models illustrated in FIG. 9, the linear models in which the fourth degree of importance $\rho$ is equal to "$\varepsilon$" from among the four degrees of importance (i.e., excludes the models M1, M3, M9, and M11). Since the number of equivalence classes (groups) of the remaining linear models (M2, M4, M10, M12) is equal to or smaller than a threshold value (for example, one), the questioning unit 22 outputs (provides), to the user 5, either all of the four remaining models or one randomly-selected model from among the four remaining models.

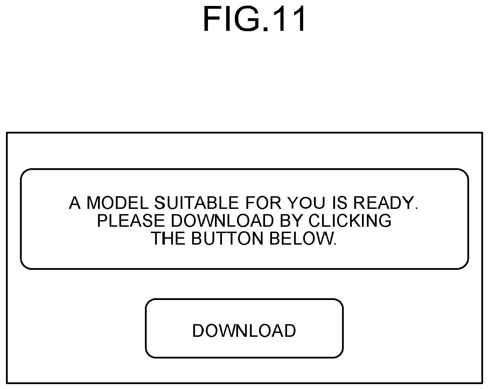

FIG. 11 is a diagram for explaining an example of a screen used at the time of outputting a linear model. As illustrated in FIG. 11, the questioning unit 22 displays on the output unit 12 or sends to the user terminal a screen that includes a message such as "A model suitable for you is ready. Please download by clicking the button below." The screen also includes a "download" button. When the "download" button is selected, the questioning unit 22 outputs, to the user terminal, either all of the four remaining models or one or more randomly-selected models from among the four remaining models.

As a result, the user 5 becomes able to obtain a linear model that is capable of implementing training using the

7

explanatory variables considered important by the user; and, based on the training done using the training data, becomes able to generate an appropriate linear model in which the on-the spot knowledge is reflected. Meanwhile, the learning (training) of a model can be performed by the information processing device 10 too.

Flow of operations

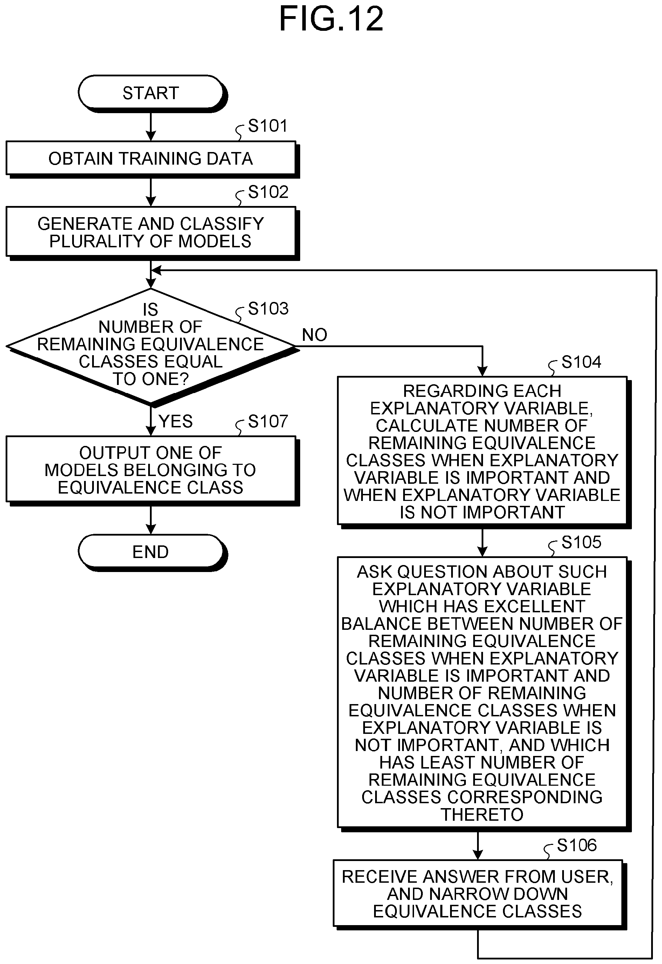

FIG. 12 is a flowchart for explaining the flow of operations. As illustrated in FIG. 12, the control unit 20 of the information processing device 10 obtains training data from the training data DB 14 (S101); and, based on the explanatory variables specified in the training data, generates a plurality of linear models, calculates equivalence classes, and groups the linear models (S102).

When the number of remaining equivalence classes is not equal to one (No at S103); regarding each explanatory variable, the control unit 20 calculates the number of remaining equivalence classes in the case in which the concerned explanatory variable is important and calculates the number of remaining equivalence classes in the case in which the concerned explanatory variable is not important (S104). Subsequently, the control unit 20 asks a question about such an explanatory variable which has an excellent balance between the number of remaining equivalence classes when that explanatory variable is important and the number of remaining equivalence classes when that explanatory variable is not important and which has the least number of remaining equivalence classes corresponding thereto (S105). Then, the control unit 20 receives the answer from the user, and narrows down the equivalence classes (S106).

Subsequently, returning to S103, the control unit 20 determines whether or not the number of remaining equivalence classes is equal to (S103). If the number of remaining equivalence classes is not equal to one (No at S103), then the control unit 20 again performs the operations from S104 onward. On the other hand, if the number of remaining equivalence classes is equal to one (Yes at S103), then the control unit 20 outputs one of the linear models belonging to that equivalence class (S107).

Effect

As explained above, the information processing device 10 classifies the linear models into equivalence classes of coefficient encoding, and the linear model suitable for the user can be treated equivalent to one of the equivalence classes. In order to ensure that the number of candidate equivalence classes decreases significantly, the information processing device 10 can select an explanatory variable about which a question is to be asked, and efficiently narrow down the equivalence classes. As a result, the information processing device 10 can generate, in a smaller number of times, the linear models suitable for the user; and can reduce the calculation cost at the time of generating models capable of providing explanation.

Meanwhile, in case a lot of questions are asked, it is believed that many users would give up midway. However, in the method implemented in the first embodiment, even if there are k number of explanatory variables, there is no need to ask questions about all explanatory variables, thereby making it more likely that a user answers the questions till the end. As a result, from the perspective of increasing the processing speed and from the perspective of providing linear models by taking into account the on-the spot knowledge of the user, the information processing device 10 becomes able to provide services giving a high degree of satisfaction and to provide linear models giving a high degree of satisfaction.

[b] Second Embodiment

Although an embodiment of the present invention is described above, the present invention can also be implemented according to various different illustrative embodiments other than the embodiment described above.

Numerical values

The examples of numerical values, the examples of linear models, the examples of explanatory variables, the counts, the coefficients, the number of groups, and the examples of screens are only exemplary, and can be changed in an arbitrary manner. Moreover, the flow of operations explained in each flowchart can also be appropriately changed without causing any contradictions. Furthermore, as long as it is possible adopt explanatory variables in a model, the model is not limited to be a linear model. Alternatively, a neural network can also be used.

System

The processing sequences, the control sequences, the specific names, and the information including various data and parameters disclosed in the above description and the drawings may be arbitrarily changed unless otherwise

The constituent elements of the device illustrated in the drawings are merely conceptual, and need not be physically configured as illustrated. The constituent elements, as a whole or in part, can be separated or integrated either functionally or physically based on various types of loads or use conditions.

The process functions implemented in the device are entirely or partially implemented by a CPU or by computer programs that are analyzed and executed by a CPU, or are implemented as hardware by wired logic.

Hardware

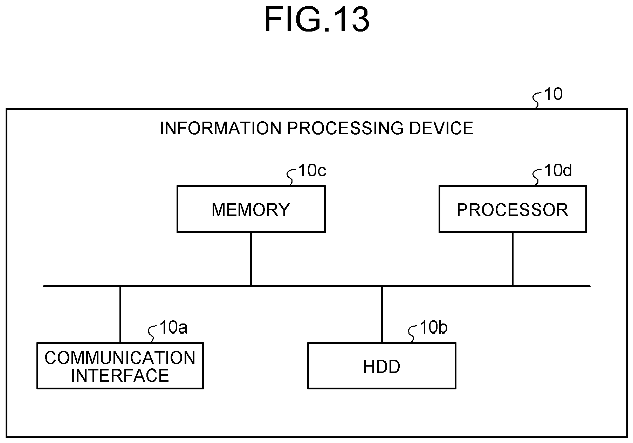

FIG. 13 is a diagram for explaining an exemplary hardware configuration. As illustrated in FIG. 13, the information processing device 10 includes a communication interface 10a, a hard disk drive (HDD) 10b, a memory 10c, and a processor 10d. The constituent elements illustrated in FIG. 13 are connected to each other by a bus.

The communication interface 10a is a network interface card that communicates with other information processing devices. The HDD 10b is used to store a computer program meant for implementing the functions illustrated in FIG. 3, and to store databases.

The processor 10d reads a computer program, which executes operations identical to the operations of the processing units illustrated in FIG. 3, from the HDD 10b; loads the computer program in the memory 10c; and executes a process for implementing the functions explained with reference to FIG. 3. For example, the process implements the functions identical to the functions of the processing units of the information processing device 10. More particularly, the processor 10d reads, from the HDD 10b, a computer program having the functions identical to the model generating unit 21 and the questioning unit 22. Then, the processor 10d executes a process that performs the operations identical to the model generating unit 21 and the questioning unit 22.

In this way, the information processing device 10 functions as an information processing device that reads and executes a computer program and implements an information processing method. Alternatively, the information processing device 10 can read the computer program from a recording medium using a medium reading device and execute the read computer program so as to implement the functions identical to the functions according to the embodiments described above. Meanwhile, the computer program is not limited to be executed by the information processing device 10. For example, even when the computer program is executed by some other information processing device or when the computer program is executed in cooperation among devices, the embodiment can still be implemented in an identical manner.

The computer program can be distributed via a network such as the Internet. Alternatively, the computer program can be recorded in a recording medium such as a hard disk, a flexible disk (FD), a compact disc read only memory (CD-ROM), a magneto-optical (MO) disk, or a digital versatile disc (DVD) readable by a computer. Then, a computer can read the computer program from the recording medium, and execute it.

According to an aspect of the embodiment, it becomes possible to reduce the calculation cost at the time of generating a model capable of providing explanation.

**Claims**

1. An information processing program that causes a computer (10) to execute a process comprising:

   classifying (22) a plurality of linear models, each of which includes one or more variables, into a plurality of groups in such a way that linear models which include identical variables included in each of the plurality of linear models and which have identical coefficient encoding with respect to the variables are grouped in same group; and
   deciding (22) that includes

   outputting first question used in deciding degree of importance of each explanatory variable included in training data which is used in training, by using machine learning, of the plurality of linear models, and
   deciding on an explanatory variable about which second question is to be asked, when a linear model in which the degree of importance is reflected is to be selected from the plurality of linear models, based on extent of decrease in number of target groups for selection according to an answer to the first question, the second question being a question to be outputted after the first question.

2. The information processing program according to claim 1, wherein the process further includes generating (21) the plurality of linear models according to formulation by combining, regarding each explanatory variable included in the training data, a first-type degree of importance in case of assuming that concerned explanatory variable is important and a second-type degree of importance in case of assuming that concerned explanatory variable is not important.

3. The information processing program according to claim 2, wherein the deciding (22) includes

calculating, for the each explanatory variable,

a first-type group count indicating number of groups to which linear models including the first-type degree of importance belong, and
a second-type group count indicating number of groups to which linear models including the second-type degree of importance belong, and

deciding, as target explanatory variable for asking the second question, explanatory variable for which total value of the first-type group count and the second-type group count is smallest.

4. The information processing program according to claim 3, wherein the deciding (22) includes

asking a user the first question about whether or not the target explanatory variable is important,
obtaining answer to the first question, and
the selection includes deleting, from the plurality of groups, a group that includes a linear model in which explanatory variable with nonidentical degree of importance to the answer is included.

5. The information processing program according to claim 4, wherein the deciding (22) includes

outputting, when group count after the selection is smaller than a threshold value, at least one linear model belonging to a group counted in the group count, and
deciding that, when the group count is equal to or greater than the threshold value, includes, using a linear model belonging to a group counted in the group count,

calculating the total value, and
deciding on the target explanatory variable for asking the second question.

6. An information processing method of executing a process by a computer (10), the process comprising:

classifying (22) a plurality of linear models, each of which includes one or more variables, into a plurality of groups in such a way that linear models which include identical variables included in each of the plurality of linear models and which have identical coefficient encoding with respect to the variables are grouped in same group; and
deciding (22) that includes

outputting a first question used in deciding degree of importance of each explanatory variable included in training data which is used in training, by using machine learning, of the plurality of linear models, and
deciding on an explanatory variable about which second question is to be asked, when a linear model in which the degree of importance is reflected is to be selected from the plurality of linear models, based on extent of decrease in number of target groups for selection according to an answer to the first question, the second question being a question to be outputted after the first question.

7. An information processing device (10) comprising;

a control unit (20) configured to
classify (22) a plurality of linear models, each of which includes one or more variables, into a plurality of groups in such a way that linear models which include identical variables included in each of the plurality of linear models and which have identical coefficient encoding with respect to the variables are grouped in same group,
output (22) a first question used in deciding degree of importance of each explanatory variable included in training data which is used in training, by using machine learning, of the plurality of linear models, and
decide (22) on an explanatory variable about which a question is to be asked, when a linear model in which the degree of importance is reflected is to be selected from the plurality of linear models, based on extent of decrease in number of target groups for selection according to an answer to the first question, the second question being a question to be outputted after the first question.

# FIG.1

# FIG.2

| EXPLANATORY VARIABLE | TEMPER-ATURE | PRESSURE | ROTATION COUNT | ⋯ |
|---|---|---|---|---|
| COEFFICIENT | 0 | 0.5 | -0.3 | ⋯ |

"TEMPERATURE" IS SUPPOSED TO BE IMPORTANT⋯ THIS MODEL IS NOT ACCEPTABLE

# FIG.3

INFORMATION PROCESSING DEVICE —10

CONTROL UNIT —20

COMMUNICA-TION UNIT —11

MODEL GEN-ERATING UNIT —21

OUTPUT UNIT —12

QUESTIONING UNIT —22

MEMORY UNIT —13

TRAINING DATA DB —14

MODEL DB —15

# FIG.4

| DATA NAME | EXPLANATORY VARIABLE 1 | EXPLANATORY VARIABLE 2 | EXPLANATORY VARIABLE 3 | ... |
|---|---|---|---|---|
| TRAINING DATA A | A1 | A2 | A3 | ... |
| ... | ... | ... | ... | ... |

# FIG.5

| MODEL\VARIABLE | $\beta_1$ | $\beta_2$ | $\beta_3$ | $\beta_4$ |
|---|---|---|---|---|
| M1, $\rho$ =( $\varepsilon$ , $\varepsilon$ , $\varepsilon$ , $\varepsilon$ ) | 0 | -0.5 | 0.3 | 0.6 |
| M2, $\rho$ =( $\varepsilon$ , $\varepsilon$ , $\varepsilon$ ,w) | 0 | -0.5 | 0.3 | 0.6 |
| M3, $\rho$ =( $\varepsilon$ , $\varepsilon$ ,w, $\varepsilon$ ) | -0.5 | 0 | 0.4 | 0.5 |
| M4, $\rho$ =( $\varepsilon$ , $\varepsilon$ ,w,w) | 0 | -0.1 | 0.3 | 0.5 |
| M5, $\rho$ =( $\varepsilon$ ,w, $\varepsilon$ , $\varepsilon$ ) | 0.4 | -0.9 | 0 | 0.8 |
| M6, $\rho$ =( $\varepsilon$ ,w, $\varepsilon$ ,w) | 0 | -0.8 | 0 | 0.9 |
| M7, $\rho$ =( $\varepsilon$ ,w,w, $\varepsilon$ ) | 0.1 | -0.3 | 0 | 0.9 |
| M8, $\rho$ =( $\varepsilon$ ,w,w,w) | 0 | -0.3 | 0 | 0.9 |
| M9, $\rho$ =(w, $\varepsilon$ , $\varepsilon$ , $\varepsilon$ ) | -0.1 | 0 | 1.0 | 0.1 |
| M10, $\rho$ =(w, $\varepsilon$ , $\varepsilon$ ,w) | 0 | -0.2 | 0.8 | 0.1 |
| M11, $\rho$ =(w, $\varepsilon$ ,w, $\varepsilon$ ) | -0.2 | 0 | 1 | 0.1 |
| M12, $\rho$ =(w, $\varepsilon$ ,w,w) | 0 | -0.1 | 0.9 | 0.1 |
| M13, $\rho$ =(w,w, $\varepsilon$ , $\varepsilon$ ) | 0.1 | -0.1 | 0.1 | 0.6 |
| M14, $\rho$ =(w,w, $\varepsilon$ ,w) | 0 | -0.7 | 0.2 | 0.6 |
| M15, $\rho$ =(w,w,w, $\varepsilon$ ) | 0.4 | -0.3 | 0.2 | 0.5 |
| M16, $\rho$ =(w,w,w,w) | 0 | -0.1 | 0.3 | 0.5 |

| GROUP |
|---|
| G1 |
| G1 |
| G2 |
| G1 |
| G3 |
| G4 |
| G3 |
| G4 |
| G2 |
| G1 |
| G2 |
| G1 |
| G5 |
| G1 |
| G5 |
| G1 |

# FIG.6

EP 4 202 804 A1

**(b) IN RESPONSE TO QUESTION ABOUT WHETHER OR NOT EXPLANATORY VARIABLE 1 (i=1) IS IMPORTANT, WHEN ANSWER IS "NO"**

| GROUP | MODEL\VARIABLE | $\beta_1$ | $\beta_2$ | $\beta_3$ | $\beta_4$ |
|---|---|---|---|---|---|
| G1 | M1, $\rho=(\varepsilon,\varepsilon,\varepsilon,\varepsilon)$ | 0 | -0.5 | 0.3 | 0.6 |
| G1 | M2, $\rho=(\varepsilon,\varepsilon,\varepsilon,w)$ | 0 | -0.5 | 0.3 | 0.6 |
| G2 | M3, $\rho=(\varepsilon,\varepsilon,w,\varepsilon)$ | -0.5 | 0 | 0.4 | 0.5 |
| G1 | M4, $\rho=(\varepsilon,\varepsilon,w,w)$ | 0 | -0.1 | 0.3 | 0.5 |
| G3 | M5, $\rho=(\varepsilon,w,\varepsilon,\varepsilon)$ | 0.4 | -0.9 | 0 | 0.8 |
| G4 | M6, $\rho=(\varepsilon,w,\varepsilon,w)$ | 0 | -0.8 | 0 | 0.9 |
| G3 | M7, $\rho=(\varepsilon,w,w,\varepsilon)$ | 0.1 | -0.3 | 0 | 0.9 |
| G4 | M8, $\rho=(\varepsilon,w,w,w)$ | 0 | -0.3 | 0 | 0.9 |
| G2 | M9, $\rho=(w,\varepsilon,\varepsilon,\varepsilon)$ | -0.1 | 0 | 1.0 | 0.1 |
| G1 | M10, $\rho=(w,\varepsilon,\varepsilon,w)$ | 0 | -0.2 | 0.8 | 0.1 |
| G2 | M11, $\rho=(w,\varepsilon,w,\varepsilon)$ | -0.2 | 0 | 1 | 0.1 |
| G1 | M12, $\rho=(w,\varepsilon,w,w)$ | 0 | -0.1 | 0.9 | 0.1 |
| G5 | M13, $\rho=(w,w,\varepsilon,\varepsilon)$ | 0.1 | -0.1 | 0.1 | 0.6 |
| G1 | M14, $\rho=(w,w,\varepsilon,w)$ | 0 | -0.7 | 0.2 | 0.6 |
| G5 | M15, $\rho=(w,w,w,\varepsilon)$ | 0.4 | -0.3 | 0.2 | 0.5 |
| G1 | M16, $\rho=(w,w,w,w)$ | 0 | -0.1 | 0.3 | 0.5 |

GROUP COUNT=3

---

| GROUP | MODEL\VARIABLE | $\beta_1$ | $\beta_2$ | $\beta_3$ | $\beta_4$ |
|---|---|---|---|---|---|
| G1 | M1, $\rho=(\varepsilon,\varepsilon,\varepsilon,\varepsilon)$ | 0 | -0.5 | 0.3 | 0.6 |
| G1 | M2, $\rho=(\varepsilon,\varepsilon,\varepsilon,w)$ | 0 | -0.5 | 0.3 | 0.6 |
| G2 | M3, $\rho=(\varepsilon,\varepsilon,w,\varepsilon)$ | -0.5 | 0 | 0.4 | 0.5 |
| G1 | M4, $\rho=(\varepsilon,\varepsilon,w,w)$ | 0 | -0.1 | 0.3 | 0.5 |
| G3 | M5, $\rho=(\varepsilon,w,\varepsilon,\varepsilon)$ | 0.4 | -0.9 | 0 | 0.8 |
| G4 | M6, $\rho=(\varepsilon,w,\varepsilon,w)$ | 0 | -0.8 | 0 | 0.9 |
| G3 | M7, $\rho=(\varepsilon,w,w,\varepsilon)$ | 0.1 | -0.3 | 0 | 0.9 |
| G4 | M8, $\rho=(\varepsilon,w,w,w)$ | 0 | -0.3 | 0 | 0.9 |
| G2 | M9, $\rho=(w,\varepsilon,\varepsilon,\varepsilon)$ | -0.1 | 0 | 1.0 | 0.1 |
| G1 | M10, $\rho=(w,\varepsilon,\varepsilon,w)$ | 0 | -0.2 | 0.8 | 0.1 |
| G2 | M11, $\rho=(w,\varepsilon,w,\varepsilon)$ | -0.2 | 0 | 1 | 0.1 |
| G1 | M12, $\rho=(w,\varepsilon,w,w)$ | 0 | -0.1 | 0.9 | 0.1 |
| G5 | M13, $\rho=(w,w,\varepsilon,\varepsilon)$ | 0.1 | -0.1 | 0.1 | 0.6 |
| G1 | M14, $\rho=(w,w,\varepsilon,w)$ | 0 | -0.7 | 0.2 | 0.6 |
| G5 | M15, $\rho=(w,w,w,\varepsilon)$ | 0.4 | -0.3 | 0.2 | 0.5 |
| G1 | M16, $\rho=(w,w,w,w)$ | 0 | -0.1 | 0.3 | 0.5 |

GROUP COUNT=5

---

**(a) IN RESPONSE TO QUESTION ABOUT WHETHER OR NOT EXPLANATORY VARIABLE 1 (i=1) IS IMPORTANT, WHEN ANSWER IS "YES"**

| GROUP | MODEL\VARIABLE | $\beta_1$ | $\beta_2$ | $\beta_3$ | $\beta_4$ |
|---|---|---|---|---|---|
| G1 | M1, $\rho=(\varepsilon,\varepsilon,\varepsilon,\varepsilon)$ | 0 | -0.5 | 0.3 | 0.6 |
| G1 | M2, $\rho=(\varepsilon,\varepsilon,\varepsilon,w)$ | 0 | -0.5 | 0.3 | 0.6 |
| G2 | M3, $\rho=(\varepsilon,\varepsilon,w,\varepsilon)$ | -0.5 | 0 | 0.4 | 0.5 |
| G1 | M4, $\rho=(\varepsilon,\varepsilon,w,w)$ | 0 | -0.1 | 0.3 | 0.5 |
| G3 | M5, $\rho=(\varepsilon,w,\varepsilon,\varepsilon)$ | 0.4 | -0.9 | 0 | 0.8 |
| G4 | M6, $\rho=(\varepsilon,w,\varepsilon,w)$ | 0 | -0.8 | 0 | 0.9 |
| G3 | M7, $\rho=(\varepsilon,w,w,\varepsilon)$ | 0.1 | -0.3 | 0 | 0.9 |
| G4 | M8, $\rho=(\varepsilon,w,w,w)$ | 0 | -0.3 | 0 | 0.9 |
| G2 | M9, $\rho=(w,\varepsilon,\varepsilon,\varepsilon)$ | -0.1 | 0 | 1.0 | 0.1 |
| G1 | M10, $\rho=(w,\varepsilon,\varepsilon,w)$ | 0 | -0.2 | 0.8 | 0.1 |
| G2 | M11, $\rho=(w,\varepsilon,w,\varepsilon)$ | -0.2 | 0 | 1 | 0.1 |
| G1 | M12, $\rho=(w,\varepsilon,w,w)$ | 0 | -0.1 | 0.9 | 0.1 |
| G5 | M13, $\rho=(w,w,\varepsilon,\varepsilon)$ | 0.1 | -0.1 | 0.1 | 0.6 |
| G1 | M14, $\rho=(w,w,\varepsilon,w)$ | 0 | -0.7 | 0.2 | 0.6 |
| G5 | M15, $\rho=(w,w,w,\varepsilon)$ | 0.4 | -0.3 | 0.2 | 0.5 |
| G1 | M16, $\rho=(w,w,w,w)$ | 0 | -0.1 | 0.3 | 0.5 |

GROUP COUNT=4

# FIG.7

| GROUP | MODEL\VARIABLE | $\beta_1$ | $\beta_2$ | $\beta_3$ | $\beta_4$ |
|---|---|---|---|---|---|
| G1 | M1, $\rho =(\varepsilon,\varepsilon,\varepsilon,\varepsilon)$ | 0 | -0.5 | 0.3 | 0.6 |
| G1 | M2, $\rho =(\varepsilon,\varepsilon,\varepsilon,w)$ | 0 | -0.5 | 0.3 | 0.6 |
| G2 | M3, $\rho =(\varepsilon,\varepsilon,w,\varepsilon)$ | -0.5 | 0 | 0.4 | 0.5 |
| G1 | M4, $\rho =(\varepsilon,\varepsilon,w,w)$ | 0 | -0.1 | 0.3 | 0.5 |
| G3 | M5, $\rho =(\varepsilon,w,\varepsilon,\varepsilon)$ | 0.4 | -0.9 | 0 | 0.8 |
| G4 | M6, $\rho =(\varepsilon,w,\varepsilon,w)$ | 0 | -0.8 | 0 | 0.9 |
| G3 | M7, $\rho =(\varepsilon,w,w,\varepsilon)$ | 0.1 | -0.3 | 0 | 0.9 |
| G4 | M8, $\rho =(\varepsilon,w,w,w)$ | 0 | -0.3 | 0 | 0.9 |
| G2 | M9, $\rho =(w,\varepsilon,\varepsilon,\varepsilon)$ | -0.1 | 0 | 1.0 | 0.1 |
| G1 | M10, $\rho =(w,\varepsilon,\varepsilon,w)$ | 0 | -0.2 | 0.8 | 0.1 |
| G2 | M11, $\rho =(w,\varepsilon,w,\varepsilon)$ | -0.2 | 0 | 1 | 0.1 |
| G1 | M12, $\rho =(w,\varepsilon,w,w)$ | 0 | -0.1 | 0.9 | 0.1 |
| G5 | M13, $\rho =(w,w,\varepsilon,\varepsilon)$ | 0.1 | -0.1 | 0.1 | 0.6 |
| G1 | M14, $\rho =(w,w,\varepsilon,w)$ | 0 | -0.7 | 0.2 | 0.6 |
| G5 | M15, $\rho =(w,w,w,\varepsilon)$ | 0.4 | -0.3 | 0.2 | 0.5 |
| G1 | M16, $\rho =(w,w,w,w)$ | 0 | -0.1 | 0.3 | 0.5 |

⇒

QUESTION ABOUT WHETHER OR NOT EXPLANATORY VARIABLE i IS IMPORTANT, AND NUMBER OF REMAINING EQUIVALENCE CLASSES CORRESPONDING TO ANSWER

| i\ANSWER | AF-FIRM-ATIVE | NEGA-TIVE |
|---|---|---|
| 1 | FOUR | THREE |
| 2 | TWO | FOUR |
| 3 | FIVE | FIVE |
| 4 | FOUR | TWO |

⇓

HIGHEST DECREASE IN NUMBER OF EQUIVALENCE CLASSES IS FOR EXPLANATORY VARIABLES 2 AND 4 ⇒ THIS TIME, QUESTION IS ASKED ABOUT EXPLANATORY VARIABLE 2

EP 4 202 804 A1

# FIG.8

IS EXPLANATORY VARIABLE "xxx" IMPORTANT?

CLICK ON THE ANSWER AND PROCEED

YES          NO

# FIG.9

| GROUP | MODEL\VARIABLE | $\beta_1$ | $\beta_2$ | $\beta_3$ | $\beta_4$ |
|---|---|---|---|---|---|
| G1 | M1, $\rho=(\varepsilon,\varepsilon,\varepsilon,\varepsilon)$ | 0 | -0.5 | 0.3 | 0.6 |
| G1 | M2, $\rho=(\varepsilon,\varepsilon,\varepsilon,w)$ | 0 | -0.5 | 0.3 | 0.6 |
| G2 | M3, $\rho=(\varepsilon,\varepsilon,w,\varepsilon)$ | -0.5 | 0 | 0.4 | 0.5 |
| G1 | M4, $\rho=(\varepsilon,\varepsilon,w,w)$ | 0 | -0.1 | 0.3 | 0.5 |
| G3 | M5, $\rho=(\varepsilon,w,\varepsilon,\varepsilon)$ | 0.4 | -0.9 | 0 | 0.6 |
| G4 | M6, $\rho=(\varepsilon,w,\varepsilon,w)$ | 0 | -0.8 | 0 | 0.9 |
| G3 | M7, $\rho=(\varepsilon,w,w,\varepsilon)$ | 0.1 | -0.9 | 0 | 0.9 |
| G4 | M8, $\rho=(\varepsilon,w,w,w)$ | 0 | -0.9 | 0 | 0.9 |
| G2 | M9, $\rho=(w,\varepsilon,\varepsilon,\varepsilon)$ | -0.1 | 0 | 1.0 | 0.1 |
| G1 | M10, $\rho=(w,\varepsilon,\varepsilon,w)$ | 0 | -0.2 | 0.8 | 0.1 |
| G2 | M11, $\rho=(w,\varepsilon,w,\varepsilon)$ | -0.2 | 0 | 1 | 0.1 |
| G1 | M12, $\rho=(w,\varepsilon,w,w)$ | 0 | -0.1 | 0.9 | 0.1 |
| G5 | M13, $\rho=(w,w,\varepsilon,\varepsilon)$ | 0.1 | -0.1 | 0.1 | 0.6 |
| G1 | M14, $\rho=(w,w,\varepsilon,w)$ | 0 | -0.7 | 0.2 | 0.6 |
| G5 | M15, $\rho=(w,w,w,\varepsilon)$ | 0.4 | -0.3 | 0.2 | 0.5 |
| G1 | M16, $\rho=(w,w,w,w)$ | 0 | -0.1 | 0.3 | 0.5 |

$\Rightarrow$

QUESTION ABOUT WHETHER OR NOT EXPLANATORY VARIABLE i IS IMPORTANT, AND NUMBER OF REMAINING EQUIVALENCE CLASSES CORRESPONDING TO ANSWER

| i\ANSWER | AFFIRM-ATIVE | NEGA-TIVE |
|---|---|---|
| 1 | TWO | TWO |
| 3 | TWO | TWO |
| 4 | TWO | ONE |

HIGHEST DECREASE IN NUMBER OF EQUIVALENCE CLASSES IS FOR EXPLANATORY VARIABLE 4 $\Rightarrow$ THIS TIME, QUESTION IS ASKED ABOUT EXPLANATORY VARIABLE 4

EP 4 202 804 A1

# FIG.10

| GROUP | MODEL\VARIABLE | $\beta_1$ | $\beta_2$ | $\beta_3$ | $\beta_4$ |
|---|---|---|---|---|---|
| G1 | M1, $\rho=(\varepsilon,\varepsilon,\varepsilon,\varepsilon)$ | 0 | -0.5 | 0.3 | 0.6 |
| G1 | M2, $\rho=(\varepsilon,\varepsilon,\varepsilon,w)$ | 0 | -0.5 | 0.3 | 0.6 |
| G2 | M3, $\rho=(\varepsilon,\varepsilon,w,\varepsilon)$ | -0.5 | 0 | 0.4 | 0.5 |
| G1 | M4, $\rho=(\varepsilon,\varepsilon,w,w)$ | 0 | -0.1 | 0.3 | 0.5 |
| G3 | M5, $\rho=(\varepsilon,w,\varepsilon,\varepsilon)$ | 0.4 | -0.9 | 0 | 0.6 |
| G4 | M6, $\rho=(\varepsilon,w,\varepsilon,w)$ | 0 | -0.8 | 0 | 0.9 |
| G3 | M7, $\rho=(\varepsilon,w,w,\varepsilon)$ | 0.1 | -0.3 | 0 | 0.9 |
| G4 | M8, $\rho=(\varepsilon,w,w,w)$ | 0 | -0.3 | 0 | 0.9 |
| G2 | M9, $\rho=(w,\varepsilon,\varepsilon,\varepsilon)$ | -0.1 | 0 | 1.0 | 0.1 |
| G1 | M10, $\rho=(w,\varepsilon,\varepsilon,w)$ | 0 | -0.2 | 0.8 | 0.1 |
| G2 | M11, $\rho=(w,\varepsilon,w,\varepsilon)$ | -0.2 | 0 | 1 | 0.1 |
| G1 | M12, $\rho=(w,\varepsilon,w,w)$ | 0 | -0.1 | 0.9 | 0.1 |
| G5 | M13, $\rho=(w,w,\varepsilon,\varepsilon)$ | -0.1 | -0.1 | 0.1 | 0.6 |
| G1 | M14, $\rho=(w,w,\varepsilon,w)$ | 0 | -0.7 | 0.2 | 0.8 |
| G5 | M15, $\rho=(w,w,w,\varepsilon)$ | 0.4 | -0.3 | 0.2 | 0.5 |
| G1 | M16, $\rho=(w,w,w,w)$ | 0 | -0.1 | 0.3 | 0.5 |

⟹

□ EQUIVALENCE CLASSES ARE NARROWED DOWN TO ONE
□ OUTPUT ONE OF MODELS M2, M4, M10, AND M12

EP 4 202 804 A1

# FIG.11

A MODEL SUITABLE FOR YOU IS READY.
PLEASE DOWNLOAD BY CLICKING
THE BUTTON BELOW.

DOWNLOAD

# FIG.12

START

S101

OBTAIN TRAINING DATA

S102

GENERATE AND CLASSIFY
PLURALITY OF MODELS

IS
NUMBER OF
REMAINING EQUIVALENCE
CLASSES EQUAL
TO ONE?

S103

NO

S104

REGARDING EACH
EXPLANATORY VARIABLE,
CALCULATE NUMBER OF
REMAINING EQUIVALENCE
CLASSES WHEN EXPLANATORY
VARIABLE IS IMPORTANT AND
WHEN EXPLANATORY VARIABLE
IS NOT IMPORTANT

YES      S107

OUTPUT ONE OF
MODELS BELONGING TO
EQUIVALENCE CLASS

END

S105

ASK QUESTION ABOUT SUCH
EXPLANATORY VARIABLE
WHICH HAS EXCELLENT
BALANCE BETWEEN NUMBER OF
REMAINING EQUIVALENCE
CLASSES WHEN EXPLANATORY
VARIABLE IS IMPORTANT AND
NUMBER OF REMAINING
EQUIVALENCE CLASSES WHEN
EXPLANATORY VARIABLE IS
NOT IMPORTANT, AND WHICH
HAS LEAST NUMBER OF
REMAINING EQUIVALENCE
CLASSES CORRESPONDING
THERETO

S106

RECEIVE ANSWER FROM USER,
AND NARROW DOWN
EQUIVALENCE CLASSES

# FIG.13

```
                                                    ⌒10
┌──────────────────────────────────────────────────────┐
│            INFORMATION PROCESSING DEVICE               │
│                                                        │
│              ⌒10c                    ⌒10d              │
│         ┌──────────┐            ┌──────────────┐       │
│         │  MEMORY  │            │  PROCESSOR   │       │
│         └──────────┘            └──────────────┘       │
│              │                         │               │
│   ───────────┴─────────────────────────┴──────────    │
│       │                         │                      │
│     ⌒10a                      ⌒10b                     │
│ ┌──────────────┐          ┌──────────────┐             │
│ │COMMUNICATION │          │     HDD      │             │
│ │  INTERFACE   │          │              │             │
│ └──────────────┘          └──────────────┘             │
│                                                        │
└──────────────────────────────────────────────────────┘
```

Europäisches
Patentamt

European
Patent Office

Office européen
des brevets

# EUROPEAN SEARCH REPORT

Application Number

EP 22 20 9299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/043610 A1 (VAUGHAN BRENT [US]) 7 February 2019 (2019-02-07) * paragraph [0012] – paragraph [0016]; figures 1A, 6, 10, 12 * * paragraph [0025] * * paragraph [0079] – paragraph [0080] * * paragraph [0114] – paragraph [0115] * * paragraph [0121] – paragraph [0149] * ----- | 1-7 | INV. G06N20/00 |
| A | AHN YONGSU ET AL: "FairSight: Visual Analytics for Fairness in Decision Making", IEEE TRANSACTIONS ON VISUALIZATION AND COMPUTER GRAPHICS, IEEE, USA, vol. 26, no. 1, 1 January 2020 (2020-01-01), pages 1086-1095, XP011752638, ISSN: 1077-2626, DOI: 10.1109/TVCG.2019.2934262 [retrieved on 2019-11-22] * Sections 1-9; the whole document * ----- | 1-7 | |

TECHNICAL FIELDS SEARCHED (IPC)

G06N

The present search report has been drawn up for all claims

| Place of search | Date of completion of the search | Examiner |
|---|---|---|
| The Hague | 4 May 2023 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 202 804 A1**

## ANNEX TO THE EUROPEAN SEARCH REPORT
## ON EUROPEAN PATENT APPLICATION NO.

EP 22 20 9299

04-05-2023

| Patent document cited in search report | | Publication date | Patent family member(s) | | Publication date |
|---|---|---|---|---|---|
| US 2019043610 | A1 | 07-02-2019 | AU | 2018219846 A1 | 12-09-2019 |
| | | | AU | 2023200849 A1 | 16-03-2023 |
| | | | CA | 3053245 A1 | 16-08-2018 |
| | | | CN | 110622179 A | 27-12-2019 |
| | | | EP | 3580700 A1 | 18-12-2019 |
| | | | GB | 2575740 A | 22-01-2020 |
| | | | JP | 2020510909 A | 09-04-2020 |
| | | | US | 2019043610 A1 | 07-02-2019 |
| | | | US | 2021035668 A1 | 04-02-2021 |
| | | | US | 2021174919 A1 | 10-06-2021 |
| | | | WO | 2018148365 A1 | 16-08-2018 |

EPO FORM P0459

**EP 4 202 804 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019169147 A